# EUROPEAN PATENT APPLICATION

(11) **EP 3 239 584 A1**
(43) Date of publication of application: **01.11.2017**
(21) Application number: 16167530.1
(22) Date of filing: 28.04.2016
(51) Int. Cl.: F16L 55/163

(54) **METHOD OF SEALING A PIPE**

(71) Applicant: 3M Innovative Properties Company, Saint Paul, MN 55133-3427 (US)
(72) Inventor: Robinson, Ian, Northallerton, North Yorkshire DL7 8TA (GB); Jobling, Wayne, Northallerton, North Yorkshire DL7 8FL (GB); Henry, Andrew Robert, Loughborough, Leicestershire LE12 6NT (GB)
(74) Representative: Bergen, Katja

(57) **Abstract**

The invention relates to a method of sealing a pipe section, the method comprising the following steps:
- providing an inflatable packer (3),
- providing an expandable sleeve (4) with a backing layer (5) and an adhesive layer (6),
- wrapping the expandable sleeve around the packer with the adhesive layer facing the outside,
- inflating the inflatable packer until it reaches a first diameter (D₁), wherein the first diameter is smaller than the inner diameter (d) of the pipe section, thereby expanding the expandable sleeve,
- inserting the inflated packer with the expanded sleeve into the pipe (1, 2) until it reaches the pipe section to be sealed, and
- further inflating the packer until it reaches a second diameter (D₂), thereby further expanding the expandable sleeve,
- wherein the second diameter is reached when the expanded sleeve touches the inner diameter (d) of the pipe section.

## Description

The invention relates to a method of sealing a pipe section. The invention also relates to the use of an expandable sleeve for sealing a pipe section.

Infrastructure pipelines, vessels or conduits that carry fluids such as potable water, gas and wastewater deteriorate over time due to their extensive use. This deterioration can lead to leaks and bursts resulting in costly damage if the pipelines are not maintained. Since these pipelines are typically located underground and provide essential utilities, maintenance and rehabilitation are preferably performed with as minimal disruption to service as possible. Several methods for performing in-situ maintenance and rehabilitation on these pipes, known as trenchless methods, have been developed. One such method involves feeding an applicator device through the pipe to spray a material along the interior surface of the pipe. The material then hardens to form a new, interior liner surface or protective coating to seal cracks and strengthen the existing pipelines. This technique is known as in-situ spray lining technique.

One technique for spray coating the interior surface of a pipe involves centrifugally spraying a liquid liner, or resin composition, with a hole-patterned cone. A device for applying a coating according to this technique is for example disclosed in WO 2014/105630 A1. A method of forming a coating on the internal surface of a drinking water pipe is also disclosed in GB 2 402 634 A.

A significant challenge in the above described in-situ spray lining techniques for rehabilitation of pipeline infrastructure is that the liquid material has limitations in its ability to fill or span circumferential discontinuities such as for example those associated with mechanical joints in the pipeline system, gaps or holes. Consequently additional treatments of those discontinuities have been developed in order to guarantee a continuous end to end solution.

If for example structural rehabilitation of a pipe infrastructure is undertaken, it is essential that the installed lining is effectively continuous. This can be of particular importance in the case of natural gas distribution pipelines where any discontinuity in the installed lining can act as site of "gas tracking" between the lining and the host pipe wall.

Current commercial solutions for the spanning of gaps, holes and joints include a number of alternatives technologies. The following provide a brief overview of some of these technologies.

Chemical grout systems are often two component liquids that are delivered to the joint or defect through umbilical lines attached to a bladder packer. The packer inflates at the joint/defect site and material is pumped into the remaining annular space. The system is allowed to cure and then the packer is deflated and oved to the next joint/defect point. Chemistry in these grouts is often a moisture cure polyurethane (e.g. a MDI-based isocyanate with water and accelerator), or acrylate gel solution (acrylamide with crosslinking agents). Adhesion to the pipe is poor in most cases and the system is most effective when repairing holes that vent to outside the pipe. Reparation of recessed areas of a pipe that are sealed, for example joints, is difficult because the material is pumped into the annular space and with no external pressure release of air, simply pressurizes air in the space leaving pockets of unfilled space.

Mechanical sleeve solutions are also known. They comprise a metal or polymer sleeve that is delivered into the pipe in a closed from. Once at the joint or defect site, the sleeve is expanded and locked into place to seal the joint or defect. The locking mechanism is typically mechanical. The expansion technique can be with a bladder packer, a hydraulic press or in larger diameter pipes by manual engagement of the expansion and locking mechanism. Sleeves for pressure pipe applications are typically composed of steel, with a rubber backing to provide the seal. They can also be deployed in conjunction with the chemically curing sealant to further improve the seal integrity. One variant simply comprises a rubber sleeve held in place by two expandable, steel locking bands. Examples for such mechanical solutions are for example disclosed in US 5,465,758, US 5,725,026, or US 5,119,862. US 4,713,870 discloses a sleeve that is made from a material which is a shape memory alloy.

An alternative technique for the in-situ rehabilitation of pipes is the cure in place pipe (CIPP). This solution comprises a felt sock or woven scrim that is impregnated with a curable resin and delivered to the pipe. The sock is then filled with hot water or steam and the resin cures to form a composite sleeve within the pipe typical resin systems are unsaturated polyester, vinyl ester or epoxy resin. The same technique can be employed to effect spot repairs, wherein the felt or scrim is wetted out with resin by hand and then wrapped around a bladder packer, delivered to the joint or defect site, expanded, allowed to cure and then the packer is deflated leaving the composite patch at the joint or defect site.

Another possibility to repair a pipeline or to prepare the pipeline before spray coating it, is disclosed in US 2009/283 212 A1. According to the solution described in this patent application a hardenable, partially hardened, flat insert mat or prepreg is used to seal a pipe. The following steps are disclosed for this method: adhesive is applied at least to the outer surface of the insert, adhesive is introduced between two superposed end regions of the insert and the insert is given the form of a cylinder jacket. The insert is then placed on an elongated balloon, a part of the insert is placed against the balloon and its jacket continuously covers at least in a partial area of it, and the remaining region of the insert does not adjoin the balloon is turned into a loop and pressed against the outer surface of the insert. The balloon with the insert is then inserted into the pipe and positioned at the leak or weak location. Finally the balloon is inflated such that the insert is pressed against the inside wall of the pipe and the adhesive is hardened.

While several of these technologies have been evaluated as a means to enable a continuous spray lining, each technique may have limitations if deployed prior to spray lining.

In view of the above there is still a need to provide a reliable, cost effective method of sealing a pipe section.

The present invention provides a method of sealing a pipe section, wherein the method comprises the following steps:
- providing an inflatable packer,
- providing an expandable sleeve with a backing layer and an adhesive layer,
- wrapping the expandable sleeve around the packer with the adhesive layer facing the outside,
- inflating the inflatable packer until it reaches a first diameter, wherein the first diameter is smaller than the inner diameter of the pipe section, thereby expanding the expandable sleeve,
- inserting the inflated packer with the expanded sleeve into the pipe until it reaches the pipe section to be sealed,
- further inflating the packer until it reaches a second diameter, thereby further expanding the expandable sleeve,
- wherein the second diameter is reached when the expanded sleeve touches the inner diameter of the pipe section.

The pipe to be sealed can be any kind of pipe such as for example a gas pipe, e.g. a natural gas pipe, or a fluid pipe, e.g. a drinking water pipe, or any other kind of industrial pipe. The pipe section can have any kind of inner diameter. Common gas or water pipes provide an inner diameter between 75 mm and 300 mm, preferably between 100 mm and 200 mm.

The inflatable packer used in this method can be any kind of commercially available packer that is able to carry an expandable sleeve, to be moved inside of a pipe and to change its diameter due to inflation or deflation. As an inflatable packer suitable for applying a sleeve according to this invention is for example an epros® drainpacker system commercially available from Trelleborg or equivalent systems from allpipe stoppers, UK.

The expandable sleeve used in the invention can be any kind of sleeve with at least a backing layer and an adhesive layer, wherein the backing layer needs to provide enough abrasion and tear resistance in order to resist any possible mechanical damage, e.g. during a lining process. It is further conformable or elastic enough to be expanded during the sealing process of the invention. And the backing layer can also provide a low surface energy in order to prevent or minimize localized adherence of the lining material. The adhesive material may be any compound that adheres or bonds two or more substrates together. The adhesive may come from either natural or synthetic sources. For this specific application it may be conformable, in order to enhance the conformability of the sleeve.

The method according to the invention basically provides the following steps: the expandable sleeve described above is wrapped around the packer with the adhesive layer facing the outside. The packer is then inflated until it reaches a first diameter that is smaller than the inner diameter of the pipe section, thereby inflating the expandable sleeve. The expanding of the expandable sleeve in this step helps to hold the sleeve in position on the inflatable packer, which is not tacky at the inside onto the packer, such that the sleeve does not move relative to the inflatable packer.

The packer with the expanded sleeve wrapped around it is then inserted into the pipe until it reaches the pipe section to be sealed. Finally the inflatable packer is inflated until it reaches a second diameter, thereby expanding the expandable sleeve, wherein the second diameter is reached when the expanded sleeve touches or contacts the inner diameter of the pipe section. In order for the method to work reliably it is important that the first diameter of the inflatable packer is not only smaller than the inner diameter of the pipe section but also smaller than any diameter of the pipe along which the inflatable packer is moved to get to the pipe section to be sealed.

The method according to the invention may comprise the step of further inflating the packer to provide a radially applied pressure onto the expanded sleeve after it has touched or contacted the inner wall of the pipe section to be sealed in order to facilitate adequate adhesion of the sleeve at the pipe. Depending on the strength of the adhesive, the pressure may be adjusted.

The radially applied pressure onto the expandable sleeve in its expanded stage may be up to 15 bar, preferable between 2 to 5 bar. The pressure in this passage refers to the pressure inside of the packer.

The radially applied pressure onto the expanded sleeve may be maintained for two to five minutes. Depending on the adhesive layer it is also possible to maintain the pressure for less than two or more than five minutes.

After radially pressurizing the sleeve in its position the packer may get deflated and removed out of the pipe. After having sealed all kind of circumferential discontinuities inside of a pipe it is possible to rehabilitate the pipe by internally spray coating or spray lining it (in-situ spray coating or spray lining of the pipe).

The adhesive layer of the expandable sleeve may be selected such that it provides a strong enough adhesion force to hold the expandable sleeve in its expanded stage at the inner wall of the pipe section to be sealed. After the inflatable packer is deflated the expandable sleeve is adhered to the inner wall of the pipe section.

The adhesive layer of the expandable sleeve may comprise a 90 degree peel adhesion based on ASTM D-3330 04/2010 between 20 and 50 N/cm with the following parameters set: stainless steel substrate, 72 hour room temperature with 3M™ VHB™ Tape 5925 tape to attach aluminium peel strip backing; 3M™ Adhesion Promoter 111 used on substrates.

The adhesive layer of the expandable sleeve may also comprise an initial 180 degree peel adhesion based on ASTM D-1000 10/2010 between 20 and 150 N/100mm with the following parameters set: 20 min. dwell at R.T. 12"/minute peel on the following substrate surfaces: aluminium, stainless steel, glass, polyurethane paint, acrylic lacquer paint and acrylic enamel paint.

The pipe section to be sealed may comprise a hole, a gap between two pipes joining each other or any other kind of gap or circumferential discontinuities or hole.

The backing layer of the expandable sleeve may be a polymeric backing layer. It may comprise polyurethane, polyethylene or co-polymers thereof as well as synthetic rubber or PVD. Preferred backing materials may include elastomeric polyurethanes, polyethylene-acrylic ionomers and ethylene-propylene rubber or any other conventional backing material.

The adhesive layer of the expandable sleeve may comprise an acrylic compound, a rubber compound and/or a mastic compound. The adhesive layer may optionally incorporate a foam carrier. A mastic adhesive is a very strong bonding agent used in many commercial and industrial settings, but is perhaps most popular for setting tiles and sealing windows, walls, and ceilings in building construction. It is traditionally derived from the resin of the mastic tree, which is where it gets its name, though it is commonly manufactured synthetically as well. Depending on the application it is generally available in thin liquid, thick glue, or paste form. It can quickly and permanently bind many different materials together, though in most cases it works best on hard, non-porous surfaces. Over time it can and sometimes will seep into cracks and crevices, which can lead to discoloration and general weakening.

Depending on the selected adhesive and polymer backing, the thickness of the adhesive may range from 0.2 mmm to 2.0 mm. The thickness of the backing may range from 0.1 mm to 1.0 mm. the total thickness of the sleeve may be between 0.3 mm to 3.0 mm.

The expandable sleeve may be provided as a flat sheet, pre-cut into a rectangular shape. The rectangular sheet may be for example 200 mmm wide (dimension along the axis of the pipe. The width may range from for example 200 mm to 300 mm in order to overlap the joint on either side. The length of the sheet - which corresponds to the circumference of the deflated packer plus an overlap - may be at least 3.14 x the inner diameter of the pipe plus an overlap. It may for example range from 200 mm to 950 mm, depending upon the inner diameter of the pipe to be rehabilitated. It preferably ranges in its widths from 310 mm to 620 mm. The pre-cut rectangular piece may provide two opposing end regions.

The packers are sized to relate to the diameter of the pipe. For a pipe with a diameter of 100 mm, the deflated packer is approximately 70 mm in diameter. The length of the sheet is therefore 70 x 3.14 = 220 mm (plus the overlap, 20 mm), which makes it to 240 mm.

When the expandable sleeve is positioned around the inflatable packer, the two opposing end regions may overlap each other thereby building or providing a cylindrical sleeve. When the inflatable packer gets inflated it expands the cylindrical sleeve, which means that the diameter of the sleeve gets larger. The overlapping end regions stay on top of each other during this expansion without moving relative to each other.

In order to provide a reliable method of sealing a pipe section, the overlapping ends may overlap each other by 10 to 40 mm so as to form a cylindrical sleeve. With an overlap of this size it is guaranteed that during the expansion step the overlapping end regions stay on top of each other without moving relative to each other.

It is also possible to provide the expandable sleeve in an elongated substantially cylindrical sleeve with a diameter that fits to the inner diameter to the pipe. Such cylindrical sleeve would not provide any overlapping areas. It would only have to be moved onto the packer in its first stage (when the first diameter is reached). It would then be expanded when the packer is brought into its second stage (when the second diameter is reached).

The invention also provides the use of an expandable sleeve comprising a backing layer and an adhesive layer for sealing an inner pipe section, wherein the sleeve is applied to the pipe section in an expanded stage.

The invention will now be described in more detail with reference to the following Figures exemplifying particular embodiments of the invention:
- Fig. 1: is a cross-sectional view of a pipe section with an inflatable packer outside of the pipe section, the inflatable packer comprising a diameter D₀;
- Fig. 2: is a cross-sectional view of a pipe section with an inflatable packer outside of the pipe section, the inflatable packer comprising a diameter D₀, the inflatable packer further comprising a sleeve being wrapped around the packer;
- Fig. 3: is a cross-sectional view of the pipe section of Fig. 1 with the inflatable packer outside of the pipe section, the inflatable packer comprising a diameter D₁, D₁ being bigger than D₀ and smaller than the inner diameter of the pipe d;
- Fig. 4: is a cross-sectional view of a pipe section of Fig. 1 with the inflatable packer with its diameter D₁ being inserted into the pipe;
- Fig. 5: is a cross-sectional view of a pipe section of Fig. 1 with the inflatable packer being inserted into the pipe and the inflatable packer being inflated to a diameter D₂ equal to the inner diameter of the pipe section;
- Fig. 6: is a cross-sectional view of an expandable sleeve wrapped around the inflatable packer;
- Fig. 7: is cross-sectional view of the pipe section of Fig. 1 with the expandable sleeve being attached to the inner wall of the pipe section and
- Fig. 8: is a cross-sectional view of a larger part the pipe section of Fig. 1 with the expandable sleeve being attached to the inner wall of the pipe section and a coating being provided inside of the pipe section covering its inner wall as well as the sleeve.

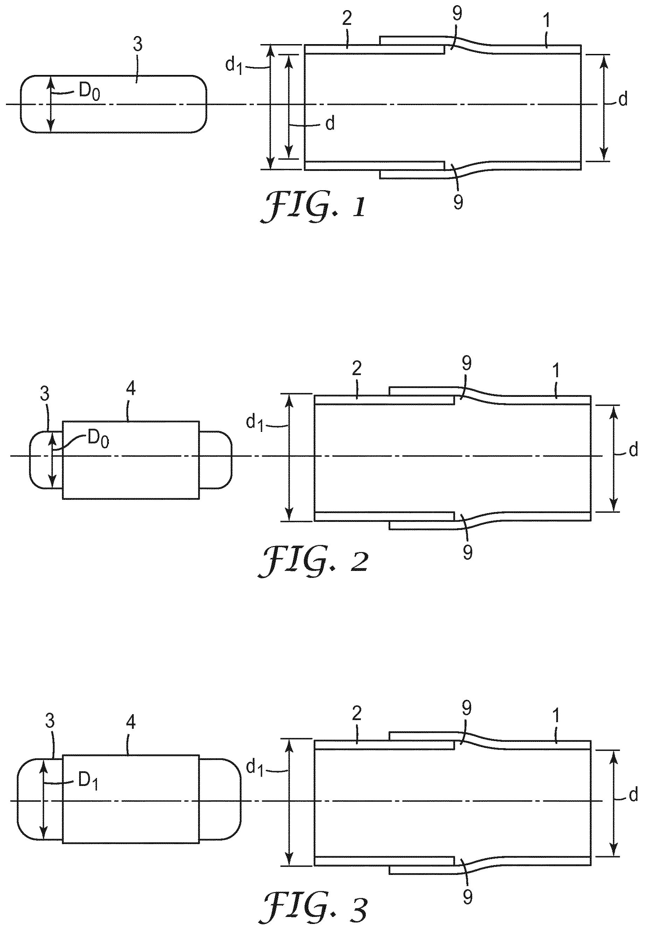

Figure 1 is a cross-sectional view of a pipe section. The pipe section is a joint of two ends of pipes 1 and 2. The inner diameter of the pipes 1 and 2 is d, wherein the end section of the pipe 1 provides an enlarged inner diameter d₁ to receive an opposing end section of the pipe 2. In that joint a gap 9 exists between the end of pipe 2 and the enlarged section of pipe 1. The materials used in in-situ maintenance procedures, e.g. in in-situ spray coating processes may have limitations in their ability to fill or span circumferential discontinuities, such as for example those discontinuities showed in Figure 1, a gap 9 due to a joint of pipes. In order to prepare the pipe section for the in-situ spray coating process, the herein described embodiment provides a pre-treatment of the pipe.

For the pre-treatment an inflatable packer is used that provides means for inflating the packer in order to change its diameter. The inflatable packer also provides mechanical means for moving it into, along the pipe and back out of the pipe. In addition, the inflatable packer provides means for centering the packer that positions the packer in the middle of the pipe. These mechanical and centering means are not shown in the drawings to ensure clarity in the drawings.

Figure 1 also schematically shows an inflatable packer 3 outside of the pipe section. The inflatable packer is in an uninflated stage and provides a diameter D₀, which is smaller than the diameter d of the pipes 1 and 2.

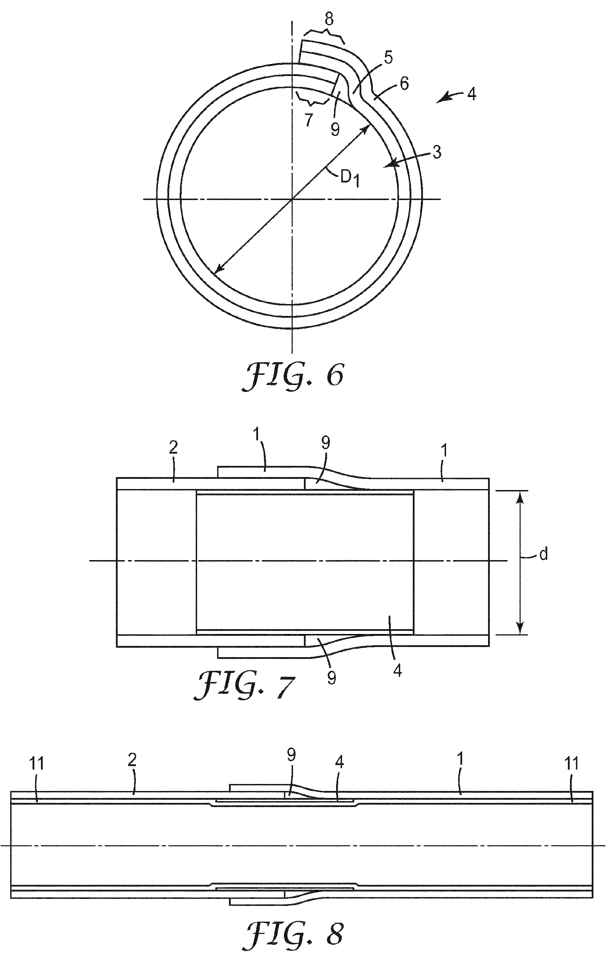

Figure 2 is a cross-sectional view of the same pipe section of pipes 1 and 2 and the inflatable packer 3, wherein the inflatable packer 3 is in its uninflated stage with a diameter D₀. An expandable sleeve 4 is wrapped around the inflatable packer such that the end portions 7 and 8 of the sleeve 4 overlap each other (see Figure 6).

Figure 3 is a cross-sectional view of the same pipe section of pipes 1 and 2 and the inflatable packer 3, wherein the inflatable packer 3 has now been inflated up to a first diameter D₁, which is larger than D₀ but still smaller than d, the diameter of the pipes 1 and 2. The expandable sleeve 4, which is wrapped around the packer 3, is stretched due to the inflation of the packer 3. By slightly stretching the sleeve 4 it is guaranteed that the sleeve is positioned onto the packer 3 and does not move relative to each other during the next process steps.

As can be seen in Figure 6 which shows a radial cross-section of the inflatable packer 3 with an expandable sleeve 4 wrapped around the packer 3, the sleeve 4 comprises two layers a backing layer 5 and an adhesive layer 6. The adhesive layer is facing the outside in Figure 6. The sleeve 4 provides two opposing end regions 7 and 8, wherein the two opposing end regions 7 and 8 overlap each other when the sleeve 4 is wrapped around the inflatable packer 3. Since the adhesive layer 6 is facing the outside of the sleeve 4 the overlapping end 8 becomes adhered to the overlapping end 7 due to the adhesive layer 6 of the overlapping end 7 getting in contact with the backing layer 5 of the opposing end 8. Thereby the sleeve 4 becomes fixed in its cylindrical shape.

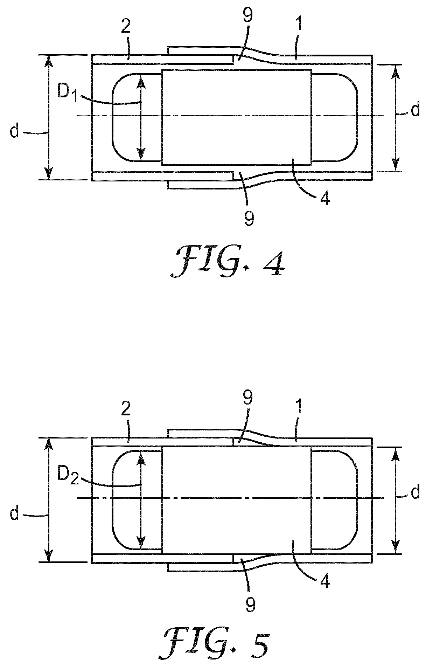

Next the inflatable packer 3 with the thereon positioned sleeve 4 is inserted into the pipe until it reaches the pipe section to be sealed (see Figure 3). The packer 3 should be located centrally over the joint. Means of cameras may be used to ensure proper positioning. Lasers may optionally be used as well to aid in achieving proper location of the sleeve 4 at the joint. When the packer 3 has reached the pipe section to be sealed it is inflated to the diameter D₂ which corresponds to the inner diameter of the pipes 1 and 2. Since the overlapping ends 8 and 7 are fixed relative to each other and do not move relative to each other, the sleeve 4 further expands until the adhesive layer 6 of the expandable sleeve 4 touches or contacts the inner walls of the pipes 1 and 2 (see Figure 5).

The inflatable packer 3 may get even more inflated or pressurized in this position in order to provide a suitable pressure onto the expanded sleeve 4 to facilitate adequate adhesion of the sleeve 4 at the inner wall of the pipes 1 and 2. The pressure radially applied to the sleeve can be up to 15 bar, the pressure referring to the pressure inside of the packer 3. Preferably it is between 2 and 5 bar. The pressure may be maintained for two to five minutes in order to assure reliable adhesion of the sleeve at the inner wall of the pipes 1 and 2. After this time the inflatable packer 3 may be deflated and moved out of the pipe again. The packer 3 may then be reloaded with another sleeve and deployed at the next spot to be sealed, e.g., at the next joint. When all spots are sealed the pipe is ready for an in-situ spray coating or lining which may leads to rehabilitation of the pipe.

Figure 7 is a cross-sectional view of the pipe section with the joint of pipes 1 and 2 with the expanded sleeve 3 being adhered to the inner wall of the pipe section thereby extending over the gap 9, that exists due to the geometry of the pipe joint, wherein the pipe 1 provides an extended diameter to receive an end section of the pipe 2. The extended sleeve 3 provides a seal for the gap 9 and therefore facilitates a reliable in-situ spray coating process. The result of a spray coating step can be seen in Figure 8 which is a cross- sectional view of the pipe section of Figure 7 with an additional layer of resin coating 11 the inner walls of the pipes 1 and 2 as well as the expanded sleeve 3 extending over the pipe joint.

Examples for sleeve materials that were tested and performed suitably are the following (all commercially available from 3M Company, St. Paul, MN, US):
- 3M™ Polyurethane Protective Tape 8641
- 3M™ Polyurethane Protective Tape 8641 (perforated)
- 3M™ Rubber Mastic 2228
- 3M™ Extreme Sealing Tape 4411 N
- 3M™ Extreme Sealing Tape 4412N
- 3M™ All Weather Flashing 8067
- 3M™ Cable Jacket Repair Tape 2234

The 3M™ (Aircraft Belly) Protective Tape 8641 is an exceptionally tough 16-mil thick polyurethane coated with an aggressive, conformable 25-mil thick pressure sensitive acrylic foam adhesive.

The 3M™ Rubber Mastic 2228 is a conformable self-fusing rubber electrical insulating and sealing tape. It consists of an ethylene propylene rubber (EPR) backing coated with an aggressive temperature-stable mastic adhesive.

The 3M™ Extreme Sealing Tape 4411 N, 4412N are tapes out of a family of single coated, pressure sensitive adhesive tapes designed for sealing applications. The backing on this tape is an ionomer film that is very tough yet flexible and abrasion resistant. The very soft and thick acrylic adhesive has excellent sealing properties. This single coated tape is designed to seal over an existing joint, seam or penetration. The adhesive is designed to adhere well to the ionomer film so that overlapping tape joints can be adhered while maintaining a strong seal.

The 3M™ All Weather Flashing 8067 is a self-adhered, waterproof flashing membrane designed for sealing around openings and penetrations in exterior walls. It has a unique acrylic pressure sensitive adhesive that aggressively sticks to all applicable surfaces and a proprietary backing with sealing function.

3M™ Cable Jacket Repair Tape 2234 is a two layer tape with an outer layer of vulcanized CSM rubber to provide outstanding chemical and environmental resistance. The inner layer is composed of flame-retardant mastic and acts as a moisture barrier which provides excellent adhesion to a variety of jacket materials.

| **Tape** | **Thickness** | **Backing Type** | **Adhesive Type** | **Adhesive Properties** | **Robustness of Backing** | **Conformability in Pipe** |
|---|---|---|---|---|---|---|
| 3M Polyurethane Protective tape 8641 | 1mm | Polyurethane | Acrylic (foam carrier) | 5 | 9 | 9 |
| 3M Polyurethane Protective tape 8641 (Perforated) | 1mm | Polyurethane | Acrylic (foam carrier) | 5 | 9 | 9 |
| 3M Rubber Mastic 2228 | 1.65mm | Rubber(EPR) | Mastic | 5 | 5 | 9 |
| **3M Extreme Sealing Tape 4411N** | **1mm** | **Ethylene/Acrylic co-polymer** | **Acrylic (foam carrier)** | **9** | **9** | **9** |
| 3M Extreme Sealing Tape 4412N | 2mm | Ethylene/Acrylic co-polymer | Acrylic (foam carrier) | 9 | 9 | 5 |
| 3M All Weather Flashing 8067 | 0.13mm | Acrylic | Acrylic | 9 | 5 | 1 |
| 3M Cable Jacket Repair Tape 2234 | 1.5mm | Rubber(EPR) | Mastic | 5 | 1 | 5 |

| **Value** | **Adhesive properties** | **Robustness** | **Conformability in pipe. (Tested in 100mm PVC pipe barrel)** |
|---|---|---|---|
| 1 | Easily detached from substrate (e.g. cast iron, steel) with minimal resistance. | Lifting of edges and/or tearing of backing following dragging of a steel panel over surface. | Begins detachment from pipe wall within 5 minutes of installation. |
| 5 | Detached from substrate (e.g. cast iron, steel) with significant force. | Marking of edges or backing following dragging of steel panel (visual only). | Begins detachment from pipe wall within 24 Hours of installation. |
| 9 | Unable to remove from substrate (e.g. cast iron, steel) without a cohesive breakdown of tape. | No sign of lifting or marking of tape backing following dragging of steel panel. | Remains fully bonded to pipe wall 24 Hours after installation. |

All sleeve materials were tested when applied to the internal surface of a 100 mm diameter of a steel pipe via an inflatable packer. The 3M™ Extreme Sealing Tape 4411 showed excellent adhesive properties, excellent robustness of the backing and excellent conformability in the pipe and were therefore rated as very promising.

## Claims

1. Method of sealing a pipe section, the method comprising the following steps:
- providing an inflatable packer (3),
- providing an expandable sleeve (4) with a backing layer (5) and an adhesive layer (6),
- wrapping the expandable sleeve around the packer with the adhesive layer facing the outside,
- inflating the inflatable packer until it reaches a first diameter (D₁), wherein the first diameter is smaller than the inner diameter (d) of the pipe section, thereby expanding the expandable sleeve,
- inserting the inflated packer with the expanded sleeve into the pipe (1, 2) until it reaches the pipe section to be sealed, and
- further inflating the packer until it reaches a second diameter (D₂), thereby further expanding the expandable sleeve,
- wherein the second diameter is reached when the expanded sleeve touches the inner diameter (d) of the pipe section.

2. Method according to claim 1, wherein the method comprises the step of further inflating the packer (3) to provide a radially applied pressure onto the expanded sleeve (4) to facilitate adhesion of the sleeve at the pipe (1, 2).

3. Method according to claim 2, wherein the radially applied pressure can be up to 15 bar, preferably 2 to 5 bar.

4. Method according to claim 1 or 2, wherein the radially applied pressure is maintained for two to five minutes.

5. Method according to any of the preceding claims, wherein the force of the adhesive in the adhesive layer (6) is strong enough to hold the expandable sleeve (4) in its expanded stage at the inner wall of the pipe section.

6. Method according to any of the preceding claims, wherein the pipe section comprises a hole, a gap (9) between two pipes joining each other or any other kind of circumferential discontinuity.

7. Method according to any of the preceding claims, wherein the backing layer (5) of the sleeve (4) is a polymeric backing layer.

8. Method according to claim 7, wherein the polymeric backing layer (5) comprises polyurethane, polyethylene or co-polymers thereof, synthetic rubber or PVC.

9. Method according to any of the preceding claims, wherein the adhesive layer (6) comprises an acrylic based, a rubber based or a mastic compound.

10. Method according to any of the preceding claims, wherein the expandable sleeve (4) is provided as a flat sheet, pre-cut into a rectangular shape with two opposing end regions (7, 8) to size for the according pipe inner diameter.

11. Method according to claim 11, wherein the expandable sleeve (4) is positioned around the inflatable packer (3) such that the two opposing end regions (7, 8) overlap each other.

12. Method according to claim 11 and 12, wherein the overlapping ends (7, 8) overlapped each other by 10 to 40 mm so as to form a cylindrical sleeve.

13. Method according to any of the claims 1 to 11, wherein the expandable sleeve (4) is provided as an elongated substantially cylindrical sleeve with a diameter to size for the according pipe inner diameter.

14. Use of an expandable sleeve comprising a backing layer and an adhesive layer for sealing an inner pipe section, wherein the sleeve is applied in an expanded stage to the pipe section.
